# NEW EUROPEAN PATENT SPECIFICATION

(11) **EP 1 762 136 B2**
(45) Date of publication and mention of the opposition decision: **16.04.2014**
(45) Mention of the grant of the patent: 30.04.2008
(21) Application number: 06101663.0
(22) Date of filing: 14.02.2006
(51) Int. Cl.: A01G 3/053

(54) **Power tool with interchangeable blades and method**
Motorisiertes Werkzeug mit auswechselbaren Messerklingen und Verfahren
Outil motorisé à lames interchangeables et méthode

(30) Priority: 07.09.2005 US 220472
(43) Date of publication of application: 14.03.2007
(60) Divisional application: 07114716.9
(73) Proprietor: Black & Decker, Inc., Newark, DE 19711 (US)
(72) Inventor: Mooney, Patrick Wade, Brockville, Ontario K6V 5T2 (CA); Rosa, Richard, Kingston, Ontario K7M 8X5 (CA)
(74) Representative: Stentiford, Andrew Charles

(56) References cited:
- EP-A- 0 696 419
- EP-A2- 0 189 768
- EP-B1- 0 974 434
- WO-A1-2006/050981
- US-A- 3 902 243
- US-A- 3 959 878
- US-A- 5 531 027

## Description

The present teachings relate to a handheld power tool having readily interchangeable cutting elements for trimming and cutting vegetation. More particularly, the present teachings relate to a resiliently biased driving element formed on a main body portion of the power tool that automatically engages various interchangeable blade carrier assemblies to allow a user to perform different types of cutting processes in a quick and safe manner.

Known power tools having interchangeable blades are cumbersome and potentially dangerous to manipulate. For example, U.S. Patent No. 3,959,848 to Irelan et al., discloses a convertible portable electric tool having interchangeable tool pieces. Each of the interchangeable tool pieces include two parts, a stationary element and a moving element, which are pivoted together at a pin. The stationary element includes a comb of teeth and, likewise, the moving element includes a comb of teeth. The rearward end of the moving element includes an elongated opening for receipt of a drive member. The drive member is rotated by a gear and the resulting circular movement oscillates the moving element about the pivot pin. As a result, the stationary element and the moving element lap one another to cut grass between the teeth upon oscillation of the moving element.

Before attaching a tool piece assembly to the power housing, the user must first rotate the drive member to a predetermined position, such as a top dead center position. Similarly, the user must manually orient the moving element into a predetermined position with respect to the stationary element. After completing these preliminary steps, the drive member can be fitted within the elongated opening of the moving element upon bringing the stationary element into proper registry relative to the power housing. Once the stationary tool element is brought into proper registry and located over guide posts, additional means are provided to maintain the tool piece releasably secured against the housing.

Accordingly, the attachment of tool pieces to a power housing as disclosed by Irelan et al. is a cumbersome process requiring various manual alignment steps to be performed by the user with respect to both the tool piece and the power housing. Generally, known power tools do not provide fool-proof mechanisms to allow easy, safe, and automatic alignment and attachment of cutting elements. Instead, users are required to spend time handling and adjusting cutting blades and other movable parts until precise alignments are achieved before a cutting element can be properly attached. Not only is this time consuming, but the user is also exposed to sharp cutting surfaces and powered moving parts in the process.

A need exists for a power tool having interchangeable cutting assemblies that can automatically align themselves into an operative position without requiring cumbersome and dangerous operated-assisted adjustments. A need also exists for interchangeable cutting assemblies that can be readily and safely latched to and selectively released from an operative position whenever desired by the user. There also exists a need for interchangeable cutting assemblies that can be safely and easily manipulated by a user.

The present teachings relate to a power tool and system having readily interchangeable cutting assemblies for cutting and trimming vegetation. The present teachings also relate to a method of attaching a blade carrier assembly to a power tool main body.

US 5,531,027 discloses a hedge trimmer having a hedge trimmer housing, a motor disposed in the hedge trimmer housing and a drive assembly associated with the motor. The drive assembly includes a first housing, a first gear connected to the rotatable drive shaft of the motor, a second housing, a second gear associated with the second housing, the second gear being in contact with the first gear so that the second gear rotates when the first gear rotates, and a support connector for causing the first and second housings to maintain a fixed positional relationship to ensure that the first and second gears remain in contact. The hedge trimmer also includes a first cutting blade operatively coupled to the second gear so that the first cutting blade reciprocates when the second gear rotates and a second cutting blade movable relative to the first cutting blade. The hedge trimmer may also include a gear-travel limit member to prevent any substantial mis-alignment of the second gear with respect to the first gear.

US 3,902,243 describes a gear support for a hedge trimmer having a housing with a motor chamber and a gear chamber therein. A motor is mounted in the motor chamber of the housing with a vertically disposed armature shaft having a drive pinion formed at the lower end thereof which extends into the gear chamber portion. A reduction gear is carried by a stub shaft mounted in the gear chamber, and drives a cutting blade through an eccentric member. The reduction gear is disposed in superposition to the cutting blade and has its forward end continuously supported by the cutting blade. A support plate is mounted in the gear chamber portion of the housing to continuously support the rearward end of the reduction gear.

According to an aspect of the present invention, there is provided a power tool comprising the features of claim 1.

According to another aspect of the present invention, there is provided a method of attaching a blade carrier assembly to a power tool main body, comprising the features of claim 8.

Additional features and advantages of various embodiments will be set forth in part in the description that follows, and in part will be apparent from the description, or may be learned by practice of various embodiments. The objectives and other advantages of various embodiments will be realized and attained by means of the elements and combinations particularly pointed out in the description herein.
Figure 1 is a perspective view of a power tool device and system including an additional, unattached blade carrier assembly according to various embodiments;
Figure 2 is a perspective view of the power tool device of Figure 1 showing a blade carrier assembly in an unlatched position according to various embodiments;
Figure 3 is a top perspective view of an interchangeable blade carrier assembly according to various embodiments;
Figure 4 is a bottom perspective view of the main body of the power tool device of Figure 1 with the interchangeable blade carrier assembly removed;
Figure 5 is an exploded perspective view of a drive motor assembly including a first type of a resiliently biased rotary drive element;
Figure 6 is a perspective view of a drive motor assembly including a second type of a resiliently biased rotary drive element including a spur gear having a resiliently mounted drive pin arranged thereon; and
Figure 7 is a perspective view of the drive motor assembly including the second type of the resiliently biased rotary drive element of Figure 6 shown in a disassembled condition.

It is to be understood that both the foregoing general description and the following detailed description are exemplary and explanatory only, and are intended to provide an explanation of various embodiments of the present teachings.

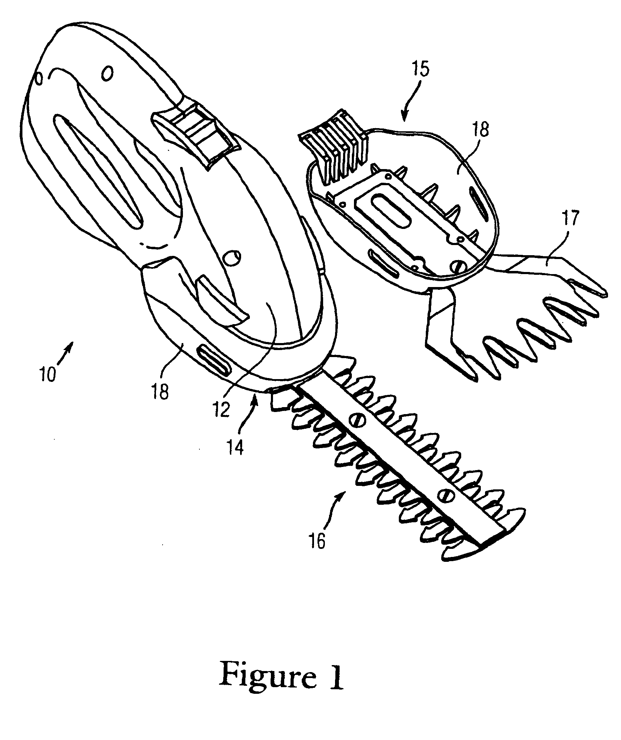

A power tool device 10 and a system for cutting and trimming vegetation is shown in Figure 1. The power tool device 10 can be a handheld unit for cutting grass, weeds, and other types of vegetation around a house or business, or any other location where unwanted growth is found. The power tool device 10 can be part of a system or kit that allows a user to perform various different cutting functions using a common main tool body 12. The power tool system can include a plurality of interchangeable blade carrier assemblies 14, 15 that can be releasably attached to the common main body portion 12. For example, as shown in Figure 1, the common main tool body 12 is shown attached to an interchangeable blade carrier assembly 14 that comprises a shrubber blade subassembly 16. Furthermore, adjacent to the power tool device 10 is an unattached interchangeable blade carrier assembly 15 that comprises a shear blade subassembly 17. Referring to the unattached interchangeable blade carrier assembly 15, each blade carrier assembly includes a blade carrier cup portion 18 and one of a plurality of different blade subassembly portions 17. In the preferred embodiment, the blade carrier cup portion 18 is the same for both the shrubber blade 16 interchangeable blade carrier assembly 14 and the shearing blade 17 interchangeable blade carrier assembly 15. As will be discussed below, the blade carrier cup portion 18 allows the interchangeable blade carrier assembly 14, 15 to be safely handled and manipulated by a user, as well as easily attached and removed from the common main tool body portion 12.

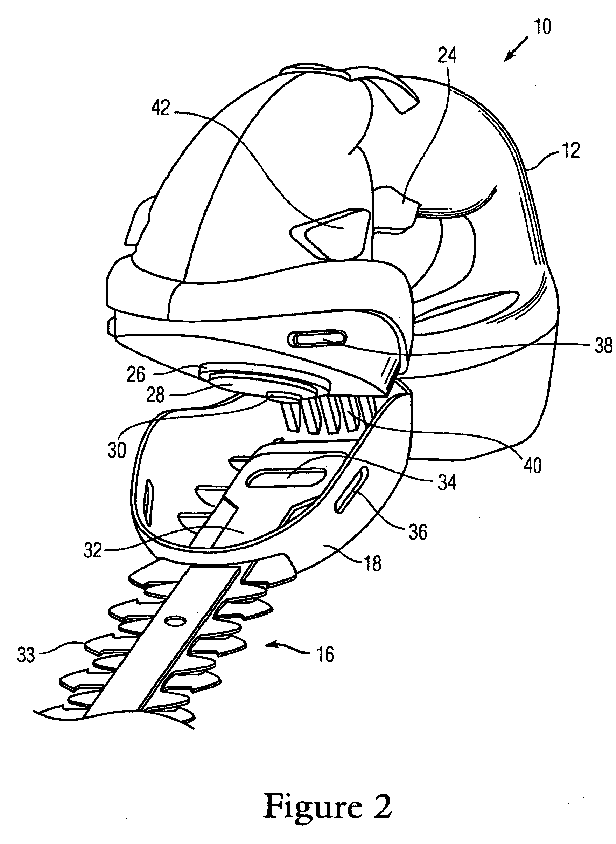

Referring to Figure 2, a close-up view of the power tool device 10 of Figure 1 is provided. The power tool device 10 is shown in a position whereby an interchangeable blade carrier assembly 14 (including a shrubber blade subassembly 16) is in the process of being latched onto or unlatched from the common main tool body 12. The positioning of the structure shown in Figure 2 shows how power can be transferred from the common main tool body 12 to the blade subassembly portion 16 of an interchangeable blade carrier assembly 14.

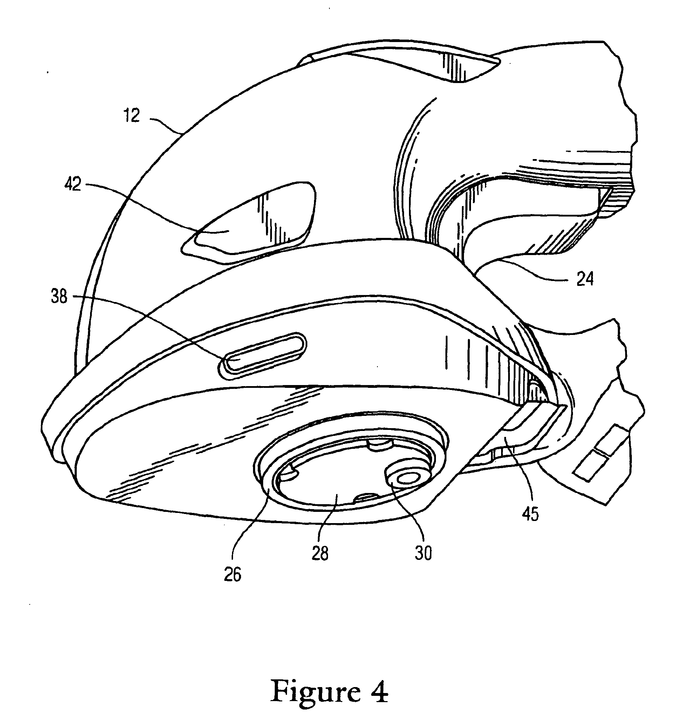

On the common main tool body 12, a trigger switch 24 allows the user to selectively control power to a motor arranged within the housing of the common main tool body 12. In a preferred embodiment, the main tool body also includes a battery pack for providing energy to the motor enabling the power tool device to be cordless device. The details of the drive motor assembly will be described below with respect to the discussion of Figure 4. According to various embodiments, the motor is operable to rotate a rotary drive element 26. As shown in Figure 2, the rotary drive element 26 can include a drive plate 28 and a drive pin 30. The drive pin 30 may be integrally attached or formed with the drive plate 28. The drive pin 30 can be eccentrically arranged on the drive plate 28.

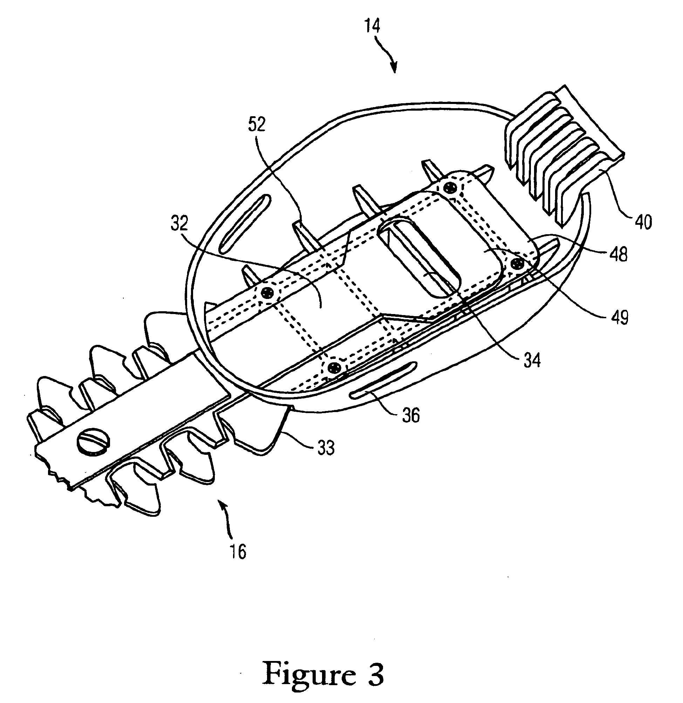

On the interchangeable blade carrier assembly 14, one or more movable blades 32, 33 can be reciprocally arranged with respect to the blade carrier cup 18. In a preferred embodiment, the power tool device 10 has one moveable blade 32 which sits on top of and works with a stationary blade 33 for providing a cutting action. As shown in Figure 2, the movable blade 32 includes a drive pin slot 34 for engagement with the drive pin 30 of the rotary drive element 26. The blade carrier cup 18 can attach to the common main tool body 12 by way of a latching mechanism. The latching mechanism may include one or more latch apertures or detents 36 formed on the blade carrier cup 18. The apertures or detents 36 may be completely cut through the blade carrier cup 18 housing as shown in Figure 2 or may be a recess on the interior housing of the blade carrier cup 18 and, therefore, not visible or evident from the exterior housing of the blade carrier cup assembly 18. The latching mechanism might also include one or more resiliently biased latch elements 38 formed on the common main tool body 12. The resiliently biased latch elements 38 may be partially or fully retractable into the common main tool body 12 and are resiliently biased outwardly in their non-actuated position. As will be further described in conjunction with Figure 3, the blade carrier cup 18 may have mating hook 40 for mating with and insertion into a recess or aperture in the main tool body 12. The blade carrier cup 18 is attached to the main tool body 12 by inserting the mating hook 40 into an aperture 45 (see Figure 4) in the main tool body 12 and then bringing the forward end of the blade carrier cup 18 into engagement with the main tool body 12 until the latch elements 38 snap into engagement with the latch apertures or detents 36 formed on the blade carrier cup 18. In the engaged position, the power tool device 10 is assembled and ready to perform a cutting operation.

On the common main tool body 12, one or more latch release pushbuttons 42 can be arranged in a position for convenient actuation by the fingers and/or thumb of a user. The one or more latch release pushbuttons 42 can be mechanically coupled with the latch elements 38. Accordingly, the latch elements 38 can be retracted from the blade carrier cup 18 by depressing at least one of the latch release pushbuttons 42 thereby releasing the blade carrier assembly 14 from the common main tool body 12.

A detailed top view of a blade carrier cup portion 18 of an interchangeable blade carrier assembly 14 is shown in Figure 3. The blade carrier cup portion 18 may have a concave shape that defines a generally concave interior. The concave interior of the cup portion 18 can be defined by a bottom surface and at least one sidewall surface. The blade carrier cup portion 18 can be arranged to engage a complimentary convex-shaped portion of the main common body portion 12. In a preferred embodiment, the blade carrier cup 18 is made of a hard resilient plastic which covers the complete underside of the blade subassembly 16, 17 (except for the cutting end) to enable a user to grab the blade carrier cup 18 and attach or remove the interchangeable blade carrier assembly 14, 15 without needing to touch the blades 32, 33.

In Figure 3, an interchangeable blade carrier assembly 14, 15 is shown with a shrubber blade subassembly 16 operatively connected a bottom interior surface of the blade carrier cup portion 18. As discussed above, in a preferred embodiment the shrubber blade subassembly 16 may include at least two cutting elements or blades, an upper movable cutting element 32 and a lower stationary cutting element 33. The lower stationary cutting element 33 can include a stationary blade end 48 that can be secured in the blade carrier cup 18. A movable blade end 49 of the upper movable cutting element 32 may also be arranged within the blade carrier cup 18. A drive pin slot 34 may be formed in movable cutting element blade 32 for engagement with the drive pin 30 of the rotary drive element 26. A track or guide mechanism 52 can be arranged on either side of the stationary cutting element 33 or the movable cutting element 32 for placement during fabrication or to guide the movable cutting element 32 as it reciprocates in a direction into and away from the housing.

At one end of the blade carrier cup portion 18, a blade carrier cup hook 40 can be arranged for engagement with the common main tool body 12. The blade carrier cup hook 40 may be inserted into an aperture 45, as seen in Figure 4, in the main tool body 12 to provide engagement at the back end of the blade carrier cup 18 with the main tool body 12. When the blade carrier cup 18 is disengaged the common main tool body 12, as shown in Figure 2, the blade carrier cup hook 40 can be disengaged from the common main tool body 12 and replaced with a different interchangeable blade carrier assembly 14, 15.

Figure 4, provides a perspective view of the bottom of the main body 12 of the power tool device 10. The drive pin 30, drive plate 28 and rotary drive element 26 can be seen as the interchangeable working assembly 14, 15 is removed. Further, the latch release pushbuttons 42 may be mechanically coupled with the latch elements 38 for securing and releasing the interchangeable working assemblies or blade assemblies 14, 15. In addition, the main body 12 includes an aperture 45 for mating with and receiving the cup hook portion 40 of the blade carrier cup 18.

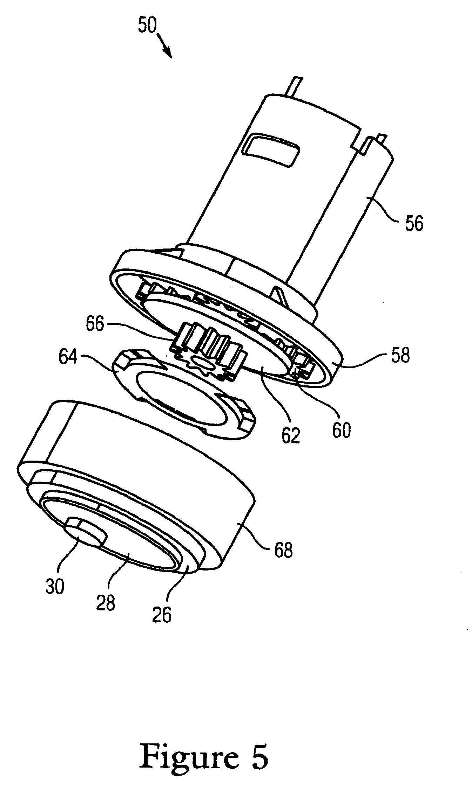

Referring to Figure 5, a drive motor assembly 50 for the power tool device 10 is shown. The drive motor assembly 50 may include an electric motor 56 that can power a resiliently biased rotary drive element 26. As shown in Figure 5, the electric motor 56 can be operatively attached to a gearbox assembly 58 that can provide power to a drive gear 66. The gearbox assembly 58 may include a gear train, including, for example, a planetary gear arrangement 60. A support surface 62 can be arranged along a portion of the drivetrain of the drive motor assembly. For example, the support surface 62 can be arranged adjacent to the planetary gear arrangement 60. The support surface 62 can provide a smooth surface upon which a spring 64, such as, for example, a spring washer 64, can be supported.

The drive gear 66 can be operatively connected with the planetary gear arrangement 60 and can provide rotary power to the rotary drive element 26. As shown in Figures 2, 4 and 5, the rotary drive element 26 can include a drive plate 28 having an eccentrically arranged drive pin 30 arranged or formed thereon. The rotary drive element 26 can rotate with respect to a rotary drive element housing 68. The rotary drive element housing 68 can attach with the gearbox assembly 58 to form the drive motor assembly structure.

In the assembled state of the drive motor assembly 50 structure, the spring 64 resiliently forces the rotary drive element 26 in a direction away from the motor 56 such that the rotary drive element 26 is forced against the rotary drive element housing 68. The rotary drive element 26 can move a distance into the rotary drive element housing 68 against the resilient force of the spring 64. For example, referring to Figures 2, 4, and 5, the rotary drive element 26 would be forced into the rotary drive element housing 68 against the force of spring 64, if the drive pin 30 is not aligned with the drive pin slot 34 of moveable blade 32 when the blade carrier assembly 14 is brought into engagement with the main tool body 12. When the motor 56 is energized by having the user depress the trigger 24, the drive plate 28, and in turn, the drive pin 30 are rotated until the resiliently biased drive pin 30 snaps or clicks into the drive pin slot 34 of one or more moveable blades 32. Once engaged in the drive pin slot 34, the drive pin 30 can continue to be rotated by the motor 56 to reciprocate moveable blade 32 and achieve a cutting action against stationary blade 33. Thus, there is no need for the user to make any preliminary alignments with respect to the drive pin 30, the drive pin slot 34, or the blade carrier assembly 14, 15.

To replace or interchange blade carrier assemblies 14, 15, for example, to change from a shrubber blade assembly 14 to a shear blade assembly 15, the user can depress one or more of the latch release pushbuttons 42. Depressing the latch release pushbuttons 42 results in the latch elements 38 being retracted such that they no longer project into or through the latch apertures or detents 36 formed on the blade carrier cup portion 18 of the blade carrier assembly 14, 15. The user can then remove the blade carrier assembly 14 by moving the blade carrier cup 18 downwardly with respect to the common main tool body 12 and removing the cup mating hook 40 from the recess or aperture 45 within the main tool body 12. At this point, the blade carrier assembly 14 can be safely detached from the common main tool body 12 and discarded by grasping the blade carrier cup portion 18 and removing it from the common main tool body 12.

A new blade carrier assembly 14, 15 can then be attached to the common main tool body 12 by the user grasping the blade carrier cup portion 18 and placing the blade carrier cup hook 40 into the main tool body recess or aperture 45 within the common main tool body 12. The front portion of the blade carrier cup portion 18 can then be brought into engagement with the main tool body 12 until the resilient latch elements 38 engage with the latch apertures or detents 36 formed on the carrier cup 18. As discussed above, when the trigger 24 is depressed, the resiliently biased rotary drive element 26 will rotate until the spring biased drive pin 30 snaps or clicks into engagement with the moveable blade drive slot 34 of the blade assembly 16.

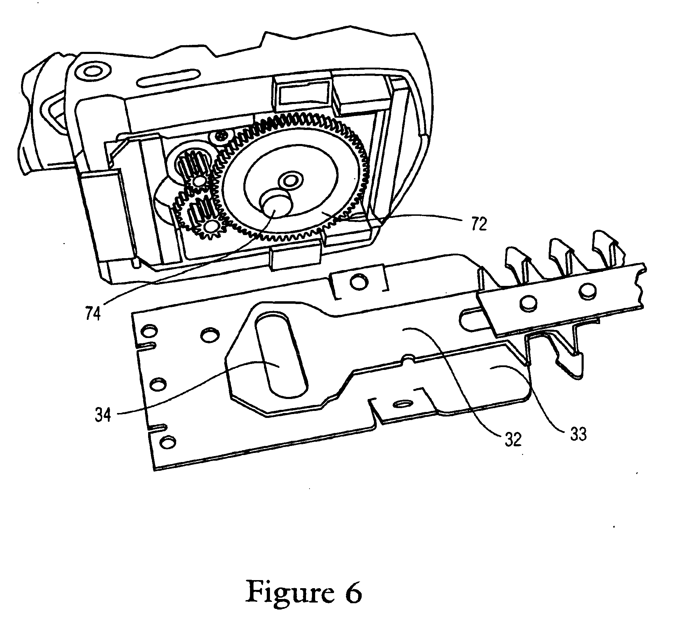

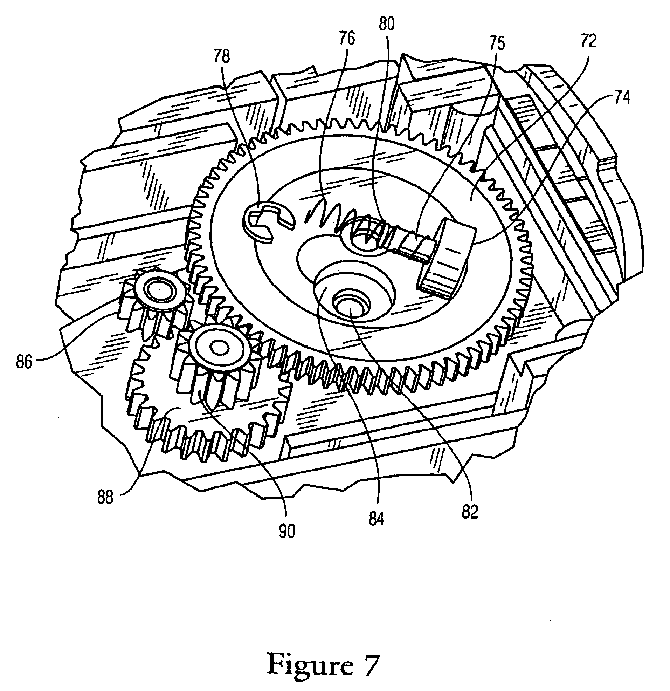

Referring to Figures 6 and 7, a second type of resiliently biased rotary drive element different from the type shown in Figure 5 is shown. The resiliently biased rotary drive element can include a spur gear 72 that can be driven by a drive motor assembly by way of a drive gear 90. The spur gear 72 can be arranged to support an eccentrically located and resiliently biased drive pin 74. The drive pin 74 can be resiliently biased in a direction away from the spur gear 72 and can be pushed in a direction towards and into the spur gear 72 against the resilient force. Thus, the resiliently biased rotary drive element includes a rotatable spur gear 72 and a resiliently biased drive pin 74 supported thereon.

Referring to Figure 7, details of the resiliently biased rotary drive element are shown. To more clearly show the structural details, the drive pin 74 is shown removed from a countersunk or stepped aperture formed in the spur gear 72, along with a disassembled C-clip 78 and spring 76. The drive pin 74 can include a shaft portion 75 and an enlarged head portion. In an operative position, the shaft portion 75 of the drive pin 74 can be arranged to extend in a throughhole 82 that passes through the spur gear 72. An enlarged, coaxially arranged borehole 84 formed in the spur gear 72 can accommodate the enlarged head portion of the drive pin 74.

The drive pin 74 can be resiliently biased by way of a spring 76. One end of the spring 76 can engage a flat surface formed at the intersection between the throughhole 82 and the enlarged aperture borehole 84, and the other end of the spring 76 can engage a backside of the head portion of the drive pin 74. The spring 76 can be arranged about the shaft portion 75 and is operable to bias the drive pin 74 such that the enlarged head portion is forced beyond a surface of the spur gear 72.

To secure the drive pin 74 within the aperture of the spur gear 72, a drive pin securing mechanism 78, such as a C-clip, can be used to engage an end of the shaft portion 75 of the drive pin 74. The C-clip 78 can clamp onto the drive pin 74 at the back side of the spur gear 72. For example, the C-clamp 78 can clamp into a groove 80 formed on the end of the drive pin 74. The securing mechanism 78 operates to prevent the spring 76 from forcing the drive pin 76 out of the aperture formed in the spur gear 72.

Referring to Figure 7, an exemplary gear train arrangement for transferring power from the motor (not shown) to the spur gear 72 is shown. The gear train arrangement can include a motor-driven input drive gear 86, a lower gear 88, and an upper gear 90 coaxially arranged with the lower gear 88 and in driving engagement with the spur gear 72. According to various embodiments, other gear train arrangements could also be employed to drive the spur gear 72.

The attachment of an interchangeable blade carrier assembly 14 to the main body portion including the resiliently biased rotary drive element of Figures 6 and 7 will now be described. As shown in Figure 6, the resiliently biased drive pin 74 will be forced into the spur gear 72 if the drive pin 74 is misaligned with the drive pin slot 34 of the moveable blade 32. In such a misaligned position, when the motor is energized, the spur gear 72, and in turn, the drive pin 74 are rotated until the resiliently biased drive pin 74 snaps or clicks into the drive pin slot 34 of moveable blade 32. Once engaged in the drive pin slot 34, the drive pin 74 can continue to be rotated by the motor thereby reciprocating moveable blade 32 and providing a cutting action against stationary blade 33. Thus, there is no need for the user to make any initial alignment of the drive pin 74 with the drive pin slot 34.

The present invention provides the user with a hassle-free working assembly or blade assembly attachment mechanism and process which provides automatic engagement between the motor and drive pin to the working assembly or blade assembly. Further, the partial housing or casing around the blade assembly enables the user to attach and remove the interchangeable blades without the concern of touching the working members or blades. Still further, the quick release and latch mechanisms enable the user to quickly and easily disengage the working assemblies through the use of the release buttons or mechanism which are located separate from the working assemblies providing a safe release mechanism enabling the user to release and remove the working assemblies without the need to contact the working members or blades.

Those skilled in the art can appreciate from the foregoing description that the present teachings can be implemented in a variety of forms. Therefore, while these teachings have been described in connection with particular embodiments and examples thereof, the true scope of the present teachings should not be so limited. Various changes and modifications may be made without departing from the scope of the teachings herein.

## Claims

1. A power tool (10) comprising:
a main body portion (12) including:
a housing,
a selectively actuatable motor (56) operatively arranged with the housing and including a rotary output (58, 86, 88, 90), and
a rotary drive element (26, 72, 74) arranged in operative contact with the rotary output (58, 86, 88, 90) of the motor (56); and
the rotary drive element (26, 72, 74) further including a resiliently biased drive pin (30, 74); and
a moveable blade portion (32) having a drive pin slot (34);
**characterised by**:
a blade carrier assembly (14, 16) capable of being selectively and removably attached to the main body portion (12), the moveable blade portion (32) being included in said blade carrier assembly (14,15),
wherein upon attaching the blade carrier assembly (14, 15) to the main body portion (12) and actuating the motor (56), the resiliently biased drive pin (30) is rotatable to a position such that the drive pin (30) is resiliently forced into the drive pin slot (34) of the moveable blade portion (32); and
wherein said blade carrier assembly (14,15) comprises a carrier cup portion (18).

2. The power tool (10) according to claim 1, wherein the rotary drive element (26) includes an integrally formed drive plate and drive pin assembly (28, 26), the drive plate and drive pin assembly (28, 26) being resiliently biased in a direction away from the motor (56).

3. The power tool (10) according to claim 2, wherein the drive plate and drive pin assembly (28, 26) are resiliently biased by way of a spring (64).

4. The power tool (10) according to claim 3, wherein the spring (64) is arranged between the motor (56) and the rotary drive element (26).

5. The power tool (10) according to claim 1, wherein the rotary drive element (72, 74) includes a gear (72) having the resiliently biased drive pin (74) arranged thereon, the gear (72) being arranged to be rotationally driven by the rotary output of the motor (56).

6. The power tool (10) according to claim 5, wherein the gear (72) includes an aperture (84) and the resiliently biased drive pin (74) is capable of retracting into the aperture (84) against a resilient force.

7. The power tool (10) according to claim 6, wherein the resiliently biased drive pin (74) is biased by a spring (76) arranged between the drive pin (74) and a bottom portion of the aperture (84).

8. A method of attaching a blade carrier assembly (14, 15) to a power tool main body comprising:
providing the power tool main body (12) with a selectively actuatable motor (56) arranged to drive a rotary drive element (26,72, 74); and
providing the blade carrier assembly (14,15) with a carrier cup portion (18) and with a moveable component (32) having a drive pin engageable structure (34);
providing the rotary drive element (26,72,74) with a resiliently biased drive pin (30, 74);
connecting the blade carrier assembly (14, 15) to the power tool main body (12) such that the resiliently biased drive pin (30, 74) is displaced if the drive pin (30, 74) is not aligned with the drive pin engageable structure (34); and
actuating the motor (56) to rotate the rotary drive element (26, 72, 74) to a position such that the drive pin (30, 74) is resiliently forced into the drive pin engageable structure (34) to actuate the movable component of the blade carrier assembly (14, 15).

## Patentansprüche

1. Angetriebenes Werkzeug (10) umfassend:
einen Hauptkörperbereich (12) mit
einem Gehäuse,
einem wahlweise betätigbaren Motor (56), der betriebsmäßig in dem Gehäuse angeordnet ist und einen drehenden Ausgang (58, 86, 88, 90) umfasst, und
einem drehenden Antriebselement (26, 72, 74), das in betriebsmäßigem Kontakt mit dem drehenden Ausgang (58, 86, 88, 90) des Motors (56) angeordnet ist, und
wobei das drehende Antriebselement (26, 72, 74) ferner einen elastisch vorgespannten Antriebsstift (30, 74) umfasst, und
einen beweglichen Blattbereich (32) mit einem Antriebsstiftschlitz (34),
**gekennzeichnet durch**
eine Sägeblattträgeranordnung (14, 15), die wahlweise und lösbar an dem Hauptkörperbereich (12) angebracht werden kann, wobei der bewegliche Blattbereich (32) in der Sägeblattträgeranordnung (14, 15) enthalten ist,
wobei nach einem Anbringen der Sägeblattträgeranordnung (14, 15) an dem Hauptkörperbereich (12) und einem Betätigen des Motors (56) der elastisch vorgespannte Antriebsstift (30) in eine Stellung drehbar ist, so dass der Antriebsstift (30) elastisch in den Antriebsstiftschlitz (34) des beweglichen Blattbereichs (32) gedrückt wird, und
wobei die Sägeblattträgeranordnung (14, 15) einen Trägerschalenbereich (18) umfasst.

2. Angetriebenes Werkzeug (10) nach Anspruch 1, wobei das drehende Antriebselement (26) eine einstückig gebildete Antriebsplatte und eine Antriebsstiftanordnung (28, 26) umfasst, wobei die Antriebsplatte und die Antriebsstiftanordnung (28, 26) elastisch in eine Richtung vorgespannt sind, die von dem Motor (56) weg weist.

3. Angetriebenes Werkzeug (10) nach Anspruch 2, wobei die Antriebsplatte und die Antriebsstiftanordnung (28, 26) durch eine Feder (64) elastisch vorgespannt sind.

4. Angetriebenes Werkzeug (10) nach Anspruch 3, wobei die Feder (64) zwischen dem Motor (56) und dem drehenden Antriebselement (26) angeordnet ist.

5. Angetriebenes Werkzeug (10) nach Anspruch 1, wobei das drehende Antriebselement (72, 74) ein Zahnrad (72) umfasst, wobei der elastisch vorgespanne Antriebsstift (74) daran angebracht ist, wobei das Zahnrad (72) angeordnet ist, um durch den drehenden Ausgang des Motors (56) drehend angetrieben zu werden.

6. Angetriebenes Werkzeug (10) nach Anspruch 5, wobei das Zahnrad (72) eine Öffnung (84) umfasst und der elastisch vorgespannte Antriebsstift (74) in die Öffnung (84) gegen eine elastische Kraft zurückgezogen werden kann.

7. Angetriebenes Werkzeug (10) nach Anspruch 6, wobei der elastisch vorgespannte Antriebsstift (74) durch eine Feder (76) vorgespannt ist, die zwischen dem Antriebsstift (74) und einem unteren Abschnitt der Öffnung (84) angeordnet ist.

8. Verfahren zum Befestigen einer Sägeblattträgeranordnung (14, 15) an einem Hauptkörper eines angetriebenen Werkzeugs mit den Schritten:
Bereitstellen des Hauptkörpers (12) des angetriebenen Werkzeugs mit einem wahlweise betätigbaren Motor (56), der angeordnet ist, um ein drehendes Antriebselement (26, 72, 74) anzutreiben, und
Bereitstellen der Sägeblattträgeranordnung (14, 15) mit einem Trägerschalenbereich (18) und mit einem beweglichen Bauteil (32), das einen Aufbau (34) aufweist, der mit einem Antriebsstift eingreifen kann,
Bereitstellen des drehenden Antriebselements (26, 72, 74) mit einem elastisch vorgespannten Antriebsstift (30, 74), Verbinden der Sägeblattträgeranordnung (14, 15) mit dem Hauptkörper (12) des angetriebenen Werkzeugs, so dass der elastisch vorgespannte Antriebsstift (30, 74) verlagert wird, wenn der Antriebsstift (30, 74) nicht mit dem Aufbau (34) ausgerichtet ist, der mit dem Antriebsstift eingreifen kann, und
Betätigen des Motors (56), um das drehende Antriebselement (26, 72, 74) in eine Stellung zu drehen, so dass der Antriebsstift (30, 74) elastisch in den Aufbau (34), der mit dem Antriebsstift eingreifen kann, gedrückt wird, um das bewegliche Bauteil der Sägeblattträgeranordnung (14, 15) zu betätigen.

## Revendications

1. Outil motorisé (10) comprenant:
une partie de corps principal (12) comprenant :
un boîtier,
un moteur pouvant être actionné sélectivement (56), agencé de manière opérationnelle avec le boîtier et comprenant une sortie rotative (58, 86, 88, 90), et
un élément d'entraînement rotatif (26, 72, 74) agencé en contact opérationnel avec la sortie rotative (58, 86, 88, 90) du moteur (56); et
l'élément d'entraînement rotatif (26, 72, 74) comprend en outre une broche d'entraînement (30, 74) sollicitée de manière élastique; et
une partie de lame mobile (32) ayant une fente de broche d'entraînement (34);
**caractérisé par** :
un ensemble de support de lame (14, 15) pouvant être fixé de manière sélective et amovible à la partie de corps principal (12), la partie de lame mobile (32) étant comprise dans ledit ensemble de support de lame (14, 15) ;
dans lequel suite à la fixation de l'ensemble de support de lame (14, 15) sur la partie de corps principal (12) et suite à l'actionnement du moteur (56), la broche d'entraînement (30) sollicitée de manière élastique est apte à tourner dans une position de sorte que la broche d'entraînement (30) est forcée de manière élastique dans la fente de broche d'entraînement (34) de la partie de lame mobile (32); et
dans lequel l'ensemble de support de lame (14, 15) comprend une partie de coupelle de support (18).

2. Outil motorisé (10) selon la revendication 1, dans lequel l'élément d'entraînement rotatif (26) comprend un ensemble de plaque d'entraînement et de broche d'entraînement (28, 26) formées de manière solidaire, l'ensemble de plaque d'entraînement et de broche d'entraînement (28, 26) étant sollicité de manière élastique dans une direction à distance du moteur (56).

3. Outil motorisé (10) selon la revendication 2, dans lequel l'ensemble de plaque d'entraînement et de broche d'entraînement (28, 26) sont sollicités de manière élastique au moyen d'un ressort (64).

4. Outil motorisé (10) selon la revendication 3, dans lequel le ressort (64) est agencé entre le moteur (56) et l'élément d'entraînement rotatif (26).

5. Outil motorisé (10) selon la revendication 1, dans lequel l'élément d'entraînement rotatif (72, 74) comprend un engrenage (72) ayant la broche d'entraînement (74) sollicitée de manière élastique agencée sur celui-ci, l'engrenage (72) étant agencé pour être entraîné en rotation par la sortie rotative du moteur (56).

6. Outil motorisé (10) selon la revendication 5, dans lequel l'engrenage (72) comprend une ouverture (84) et la broche d'entraînement (74) sollicitée de manière élastique est apte à se rétracter dans l'ouverture (84) à l'encontre d'une force élastique.

7. Outil motorisé (10) selon la revendication 6, dans lequel la broche d'entraînement (74) sollicitée de manière élastique, est sollicitée par un ressort (76) agencé entre la broche d'entraînement (74) et une partie inférieure de l'ouverture (84).

8. Procédé pour fixer un ensemble de support de lame (14, 15) sur un corps principal d'outil motorisé, comprenant:
munir le corps principal (12) d'outil motorisé d'un moteur (56) pouvant être actionné de manière sélective, agencé pour entraîner un élément d'entraînement rotatif (26, 72, 74) ; et
munir l'ensemble de support de lame (14, 15) d'une partie de coupelle de support (18) et d'un composant mobile (32) ayant une structure (34) pouvant mettre en prise la broche d'entraînement;
munir l'élément d'entraînement rotatif (26, 72, 74) avec une broche d'entraînement (30, 74) sollicitée de manière élastique ;
raccorder l'ensemble de support de lame (14, 15) au corps principal (12) de l'outil motorisé de sorte que la broche d'entraînement (30, 74) sollicitée de manière élastique est déplacée si la broche d'entraînement (30, 74) n'est pas alignée avec la structure (34) pouvant mettre en prise la broche d'entraînement ; et
actionner le moteur (56) pour faire tourner l'élément d'entraînement rotatif (26, 72, 74) jusqu'à une position telle que la broche d'entraînement (30, 74) est forcée de manière élastique dans la structure (34) pouvant mettre en prise la broche d'entraînement pour actionner le composant mobile (32) de l'ensemble de support de lame (14, 15).
